# EUROPEAN PATENT APPLICATION

(11) **EP 4 020 339 A1**
(43) Date of publication of application: **29.06.2022**
(21) Application number: 21216740.7
(22) Date of filing: 22.12.2021
(51) Int. Cl.: G06N 20/00, G06F 16/332

(54) **INFORMATION PROCESSING SYSTEM, INFORMATION PROCESSING METHOD AND INFORMATION PROCESSING DEVICE**

(30) Priority: 23.12.2020 JP 2020213626
(71) Applicant: Rakuten Group, Inc., Tokyo 158-0094 (JP)
(72) Inventor: NGUYEN, TheMinh, Tokyo, 158-0094 (JP); ABE, Noriyuki, Tokyo, 158-0094 (JP)
(74) Representative: EIP

(57) **Abstract**

An information processing system obtains a training data set including input data and a label, which is ground truth data for the input data, training a machine learning model on the training data set, inputs test data to the machine learning model trained on the training data set, evaluates whether performance of the machine learning model satisfies a predetermined condition based on an output of the machine learning model to which the test data is entered, updates the training data set when the performance of the machine learning model is evaluated not to satisfy the predetermined condition, and retrains the machine learning model on the updated training data set. The information processing system repeats updating, retraining, and evaluating the data set in response to the evaluation.

## Description

### BACKGROUND OF THE INVENTION

### 1. Field of the Invention

The present invention relates to an information processing system, an information processing method, and an information processing device.

### 2. Description of the Related Art

In recent years, a system called a chatbot for automating responses to questions has been developed. When a question is entered, the system determines which of several predetermined labels the question corresponds to, and outputs the answer corresponding to the determined label. Recently, machine learning models have been often used in the processing of natural language understanding (NLU) for determining the corresponding labels based on such a question.

JP2004-5648A discloses a method for assisting in annotating training data for training the natural language understanding system.

It is known that performance of a trained machine learning model varies depending on the configuration of training data sets used for training the machine learning model. As such, when creating a training data set, the administrator needs to investigate and edit the training data set for issues. It has been a great burden for the administrator to analyze the training data set.

### SUMMARY OF THE INVENTION

One or more embodiments of the present invention have been conceived in view of the above, and an object thereof is to provide a technique for facilitating preparation of a training data set for ensuring performance of a machine learning model.

In order to solve the above problems, an information processing system according to the present invention includes a training server that trains a machine learning model on a training data set including input data and a label, which is ground truth data for the input data, and a response server that inputs input data, which is entered by a user, to the trained machine learning model and outputs response data based on a label that is output by the machine learning model. The information processing system includes initial data obtaining means for obtaining the training data set, training means for training the machine learning model on the training data set, evaluating means for inputting test data to the machine learning model trained on the training data set and evaluating whether performance of the machine learning model satisfies a predetermined condition based on an output of the machine learning model to which the test data is entered, deployment means for deploying the trained machine learning model into the response server when the performance of the machine learning model is evaluated to satisfy the predetermined condition, data updating means for updating the training data set when the performance of the machine learning model is evaluated not to satisfy the predetermined condition, and retraining means for retraining the machine learning model on the updated training data set, wherein the information processing system repeats processing of the data updating means, the retraining means, and the evaluating means in response to the evaluation of the evaluating means.

An information processing method according to the present invention includes obtaining a training data set including input data and a label, which is ground truth data for the input data and used for generating response data, training a machine learning model on the training data set, inputting test data to the machine learning model trained on the training data set and evaluating whether performance of the machine learning model satisfies a predetermined condition based on an output of the machine learning model to which the test data is entered, deploying the trained machine learning model, for which the performance is evaluated, into a response server when the performance of the machine learning model is evaluated to satisfy the predetermined condition, the response server inputting input data, which is entered by a user, to the trained machine learning model and outputting response data based on a label that is output by the machine learning model, updating the training data set when the performance of the machine learning model is evaluated not to satisfy the predetermined condition, and retraining the machine learning model on the updated training data set, wherein the information processing method repeats, in response to the evaluation, updating the training data set, retraining the machine learning model, and evaluating the performance of the machine learning model.

An information processing device according to the present invention includes initial data obtaining means for obtaining a training data set including input data and a label, which is ground truth data for the input data and used for generating response data, training means for training a machine learning model on the training data set, evaluating means for inputting test data to the machine learning model trained on the training data set and evaluating whether performance of the machine learning model satisfies a predetermined condition based on an output of the machine learning model to which the test data is entered, deployment means for deploying the trained machine learning model, for which the performance is evaluated, into a response server when the performance of the machine learning model is evaluated to satisfy the predetermined condition, the response server inputting input data, which is entered by a user, to the trained machine learning model and outputting response data based on a label that is output by the machine learning model, data updating means for updating the training data set when the performance of the machine learning model is evaluated not to satisfy the predetermined condition; and retraining means for retraining the machine learning model on the updated training data set, wherein the information processing device repeats processing of the data updating means, the retraining means, and the evaluating means in response to the evaluation of the evaluating means.

In one embodiment of the present invention, the information processing system may further include detecting means for determining whether the training data set satisfies a detection condition when the performance of the machine learning model is evaluated not to satisfy the predetermined condition, and the data updating means may update the training data set when the detection condition is determined to be satisfied.

In one embodiment of the present invention, the detecting means may determine whether a number of items of input data for each label in the training data set satisfies the detection condition, and when the detection condition is determined to be satisfied, the data updating means may update the training data set.

In one embodiment of the present invention, the data updating means may update the training data set based on an improvement parameter when the performance of the machine learning model is evaluated not to satisfy the predetermined condition, and the information processing system may further include parameter updating means for updating the improvement parameter in response to an update of the training data set.

In one embodiment of the present invention, the information processing system may further include log means for storing input data in a log storage when the user inputs the input data, wherein the detecting means may determine whether there is a label for which a number of items of the input data is insufficient in the training data set, and when it is determined that there is a label for which a number of items of the input data is insufficient, the data updating means may extract an input data item corresponding to the label from the input data stored in the log storage and add training data including the extracted input data item and the label to the training data set.

In one embodiment of the present invention, when it is determined that there is a label for which a number of items of the input data is insufficient, the data updating means may extract an input data item corresponding to the label from the input data stored in the log storage based on the input data item corresponding to the label in the training data set and the input data stored in the log storage.

In one embodiment of the present invention, the information processing system may further include log means for storing, when the user inputs input data, the input data in a log storage, and test data adding means for extracting an input data item corresponding to one of labels from the input data stored in the log storage and adding a set of the extracted input data item and the label to the training data.

The present invention facilitates preparation of a training data set for ensuring performance of a machine learning model.

### BRIEF DESCRIPTION OF THE DRAWINGS

FIG. 1 is a diagram illustrating an example of an information processing system according to the present embodiment;
FIG. 2 is a block diagram showing functions implemented by the information processing system;
FIG. 3 shows an example of a training data set;
FIG. 4 is a block diagram showing a functional configuration of a question answering unit;
FIG. 5 is a flow chart schematically showing processing related to training of a machine learning model in the information processing system;
FIG. 6 is a diagram for explaining processing of a problem detecting unit and a data changing unit;
FIG. 7 is a flow chart showing an example of processing related to data analysis;
FIG. 8 is a diagram for explaining adjustment of the number of samples of training data sets;
FIG. 9 is a flow chart showing an example of processing of the question answering unit;
FIG. 10 is a diagram showing an example of a question log;
FIG. 11 is a flow chart showing an example of data addition; and
FIG. 12 is a diagram for explaining a relationship between similarity and extraction of user questions.

### DESCRIPTION OF THE EMBODIMENTS

An embodiment of the present invention will be described below with reference to the accompanying drawings. Regarding the elements designated with the same numerals, their overlapping description will be omitted. In this embodiment, an information processing system that accepts a question from a user, determines which of a plurality of predetermined labels the question corresponds to, and outputs a response corresponding to the determined label, such as a chat bot system, will be described.

In the following, a question is entered as text, although the question may be entered by voice. This information processing system uses a machine learning model for implementing natural language understanding (NLU). The information processing system trains the machine learning model on training data sets, and the trained machine learning model is used to analyze questions from users.

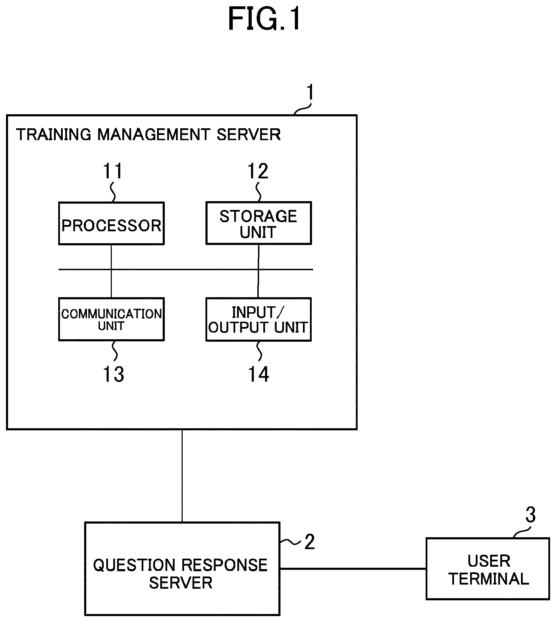

FIG. 1 is a diagram illustrating an example of an information processing system according to the present embodiment. The information processing system includes a training management server 1 and a question response server 2. The training management server 1 and the question response server 2 are connected via a network, and the question response server 2 is connected to a plurality of user terminals 3 via a network. The user terminal 3 is operated by a user who uses a service provided by the information processing system and asks questions. The user terminal 3 is, for example, a smart phone and a personal computer.

The training management server 1 includes a processor 11, a storage unit 12, a communication unit 13, and an input/output unit 14. The training management server 1 is a server computer. Similarly to the training management server 1, the question response server 2 is a server computer and includes, although not shown, a processor 11, a storage unit 12, a communication unit 13, and an input/output unit 14. The functions of the training management server 1 and the question response server 2 to be described below may be implemented by a plurality of server computers.

The processor 11 operates in accordance with a program stored in the storage unit 12. The processor 11 controls the communication unit 13 and the input/output unit 14. The program may be provided via the Internet, for example, or stored in a computer-readable storage medium, such as a flash memory and a DVD-ROM, so as to be provided.

The storage unit 12 is configured of a memory element, such as a RAM and a flash memory, and an external storage device, such as a hard disk drive. The storage unit 12 stores the program. The storage unit 12 stores information and calculation results entered from the processor 11, the communication unit 13, and the input/output unit 14.

The communication unit 13 implements a communication function with other devices, and is configured by, for example, integrated circuits for a wireless LAN and a wired LAN. The communication unit 13 inputs information received from other devices to the processor 11 and the storage unit 12 under the control of the processor 11, and transmits the information to other devices.

The input/output unit 14 includes a video controller that controls display output devices and a controller that obtains data from the input device, for example. Examples of the input device include a keyboard, a mouse, and a touch panel. The input/output unit 14 outputs display data to the display output device under the control of the processor 11, and obtains the data entered when the user operates the input device. The display output device is a display device connected to the outside, for example.

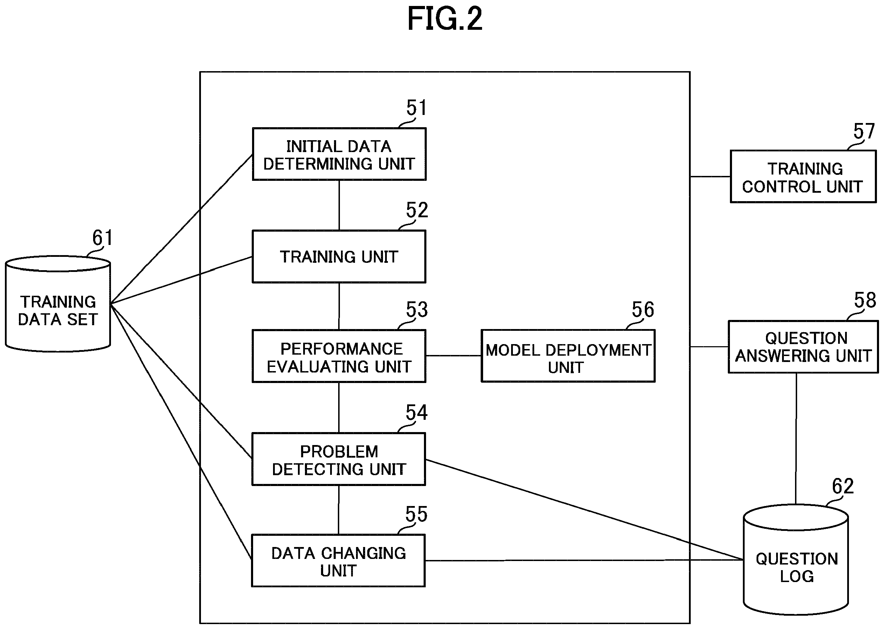

Next, functions provided by the information processing system will be described. FIG. 2 is a block diagram showing the functions implemented by the information processing system. The information processing system functionally includes an initial data determining unit 51, a training unit 52, a performance evaluating unit 53, a problem detecting unit 54, a data changing unit 55, a model deployment unit 56, a training control unit 57, and a question answering unit 58. The functions of the initial data determining unit 51, the training unit 52, the performance evaluating unit 53, the problem detecting unit 54, the data changing unit 55, the model deployment unit 56, and the training control unit 57 are implemented by executing programs stored in the storage unit 12 by the processor 11 included in the training management server 1, and controlling the communication unit 13, for example. The question answering unit 58 is implemented when the processor 11 included in the question response server 2 executes a program stored in the storage unit 12 and controls the communication unit 13, for example.

The information processing system further includes a training data set 61 and a question log 62 as data. Such data may be stored mainly in the storage unit 12, or stored in a database or a storage implemented by another server.

The initial data determining unit 51 acquires the initial training data set 61. The training data set 61 include a plurality of items of training data. Each item of the training data includes question data and labels, which are ground truth data to the question data.

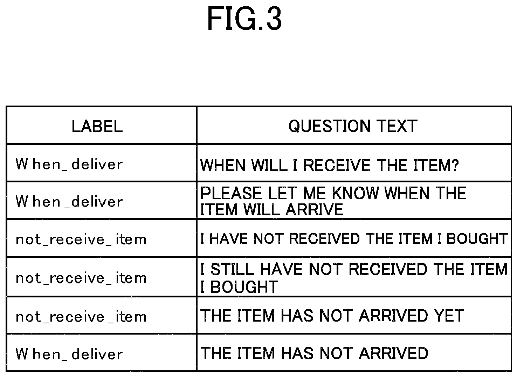

FIG. 3 shows an example of the training data set 61. The question data is, for example, a text of a question as shown in FIG. 3, and represents a question entered as a natural language. The question data may be an analysis result generated by analyzing the text of the question by morphological analysis, for example. During the training, the training unit 52 may use the morphological analysis to convert the question data including texts of questions into question data including a group of words, and the converted question data may be entered into the machine learning model. The label stored in the training data is one of a plurality of predetermined labels. The label is information that indicates intent of a user who entered a question, and is sometimes referred to as "intent" in the following. The number of items of the training data containing a certain label is plural. For simplicity, question data (question text) of the training data item containing a certain label is referred to as question data (question text) belonging to the certain label.

The training unit 52 trains the machine learning model on the training data set 61. When the training data is updated, the training unit 52 retrains the machine learning model on the updated training data set 61.

The machine learning model is configured to output one of a plurality of labels in response to entry of the question data. In the present embodiment, a so-called Deep Learning, such as CNN (Convolutional Neural Network), RNN (Recurrent Neural Network), and BERT (Bidirectional Encoder Representations from Transformers), may be used to construct a machine learning model to which a word divided by the morphological analysis is entered or a machine learning model in which a machine learning, such as a random forest and a support vector machine (SVM) to which a vector composed of a characteristic word extracted from the morphological analyzed word is entered, is implemented. The machine learning model may be provided by an external system, and the details of the processing of the machine learning model may be unclear.

The performance evaluating unit 53 inputs test data to the machine learning model trained on the training data set 61, and evaluates whether the performance of the machine learning model satisfies a predetermined condition based on outputs of the machine learning model to which the test data is entered. The test data includes a plurality of records, and each record includes question data and a label that is an answer to the question data. For example, the performance evaluating unit 53 may calculate a correct answer rate for each label, and evaluate whether the performance satisfies a predetermined condition based on whether there is a label having lower correct answer rate than a predetermined threshold value.

When the performance is evaluated as not satisfying the predetermined condition, the problem detecting unit 54 determines whether the training data set 61 satisfies a predetermined condition for detecting a problem.

When it is determined that the condition for detecting the problem is satisfied, the data changing unit 55 updates the training data set 61. A specific method of detecting and updating a problem will be described later.

When it is determined that the performance satisfies the predetermined condition, the model deployment unit 56 deploys the trained machine learning model into the question response server 2 that answers an actual question from a user. The machine learning model may be deployed by copying parameters of the trained machine learning model to the question response server 2, or by copying the virtual environment including the trained machine learning model to the question response server 2. Alternatively, the machine learning model may be deployed by switching the input destination of the question data so as to input the question data of the actual question from the user to the learned machine learning model constructed on the cloud.

The training control unit 57 controls the initial data determining unit 51, the training unit 52, the performance evaluating unit 53, the problem detecting unit 54, and the data changing unit 55, and controls the maintenance of the training data set 61 and the training of the machine learning model. When the performance evaluating unit 53 determines that the performance satisfies the predetermined condition, the training control unit 57 controls the model deployment unit 56 to deploy the trained machine learning model.

The question answering unit 58 acquires a question entered by the user from the user terminal 3 and outputs an answer to the question. The information indicating the entered question is also stored in the question log 62.

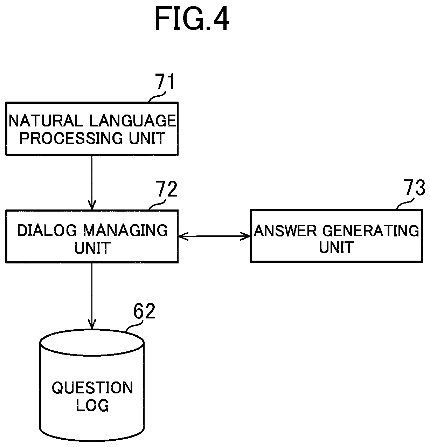

FIG. 4 is a block diagram showing a functional configuration of the question answering unit 58. The question answering unit 58 functionally includes a natural language processing unit 71, a dialog managing unit 72, and an answer generating unit 73. These functions are implemented when the processor 11 included in the question response server 2 executes a program stored in the storage unit 12 and controls the communication unit 13, for example.

The natural language processing unit 71 is a function for implementing so-called natural language understanding (NLU). The natural language processing unit 71 performs morphological analysis, and includes a machine learning model, to which question data generated by the morphological analysis from a question text is entered and outputs a label. The natural language processing unit 71 may transmit a question text or question data to a natural language understanding function implemented by another server and acquire its result. The question answering unit 58 may further include an ASR (Automatic Speech Recognition)/STT (Speech to Text) function for analyzing the question voice input by the user, and its output may be entered to the natural language processing unit 71.

The dialog managing unit 72 acquires the answer text of the question from the answer generating unit 73 based on the label output from the natural language processing unit 71, and transmits the answer text to the user terminal 3. The question answering unit 58 may further include a TTS (Text to Speech) function for converting the answer text into voice, and output the converted voice to the user terminal 3 instead of the answer text.

Here, a question from a user and an answer to the question are defined as one turn, and the question response server 2 may eventually output an answer desired by the user based on a series of turns. More specifically, the dialog managing unit 72 may manage a state transition based on a label that is output for a certain question text or question data and cause the answer generating unit 73 to generate an answer corresponding to the transitioned state. For example, when the label "forget_password" is output to the question text "I forget my password" of the user at the first turn, the dialog managing unit 72 may cause the answer generating unit 73 to generate "Do you know Email address? (Yes/No)" as an answer, and when the label "yes" is output to the next question text "Yes, I know" of the user, the dialog managing unit 72 may cause the answer generating unit 73 to generate an answer "Please reset your password from the following link" corresponding to the state transition of the label from "forget_password" to "yes".

The dialog managing unit 72 stores the question text or the question data, information indicating whether a label has been determined, the determined label, and feedback of the user to the answer in the question log 62.

The answer generating unit 73 generates an answer text corresponding to the determined label under the control of the dialog managing unit 72. Details of the processing of the natural language processing unit 71, the dialog managing unit 72, and the answer generating unit 73 will be described later.

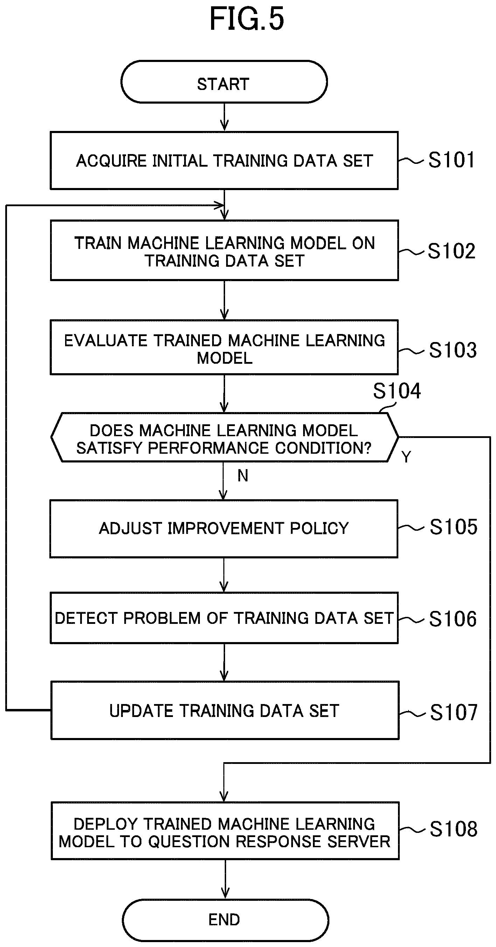

The training of the machine learning model and the preparation of the training data set 61 by the initial data determining unit 51, the training unit 52, the performance evaluating unit 53, the problem detecting unit 54, the data changing unit 55, the model deployment unit 56, and the training control unit 57 will be further described below. FIG. 5 is a flow chart schematically showing processing related to training of the machine learning model in the information processing system.

First, the initial data determining unit 51 acquires an initial training data set 61 and a set of test data (hereinafter referred to as a test data set) based on an instruction from the training control unit 57 (step S101). The test data set includes a plurality of items of test data, and the test data includes the question data and a label to be output to the question data.

Next, the training control unit 57 starts the processing of the training unit 52, and the training unit 52 trains the machine learning model on the training data set 61 (step S102). When the step S102 is executed for the first time, the training unit 52 trains the machine learning model on the training data set 61 acquired by the initial data determining unit 51.

When the machine learning model is trained, the training control unit 57 starts the processing of the performance evaluating unit 53, and the performance evaluating unit 53 determines whether the trained machine learning model satisfies a performance condition (step S104). More specifically, for each of items of test data, the performance evaluating unit 53 inputs question data included in such test data into the trained machine learning model, and determines whether the output is the same as the label included in the test data (whether the output is correct). The performance evaluating unit 53 calculates a percentage of correct answers for each label in the training data, and determines whether there is a label having the calculated percentage lower than a determination threshold value. The performance evaluating unit 53 determines that the performance condition is satisfied when there is no label having the calculated percentage lower than the determination threshold value, and determines that the performance condition is not satisfied when there is a label having the calculated percentage lower than the determination threshold value. The performance evaluating unit 53 may obtain a percentage of correct answers for each label output by the machine learning model, and determine whether the performance condition is satisfied based on such a percentage.

If it is determined that the trained machine learning model does not satisfy the performance condition (N in step S104), the training control unit 57 adjusts improvement policy (step S105). The training control unit 57 then starts the processing of the problem detecting unit 54, and the problem detecting unit 54 detects a problem of the training data set 61 (step S106). The training control unit 57 may send an improvement parameter to the problem detecting unit 54 based on the improvement policy, and the problem detecting unit 54 may detect the problem of the training data set 61 based on the improvement parameter. Details of the improvement policy and the improvement parameter will be discussed later.

When the processing of the problem detecting unit 54 is executed, the training control unit 57 starts the processing of the data changing unit 55, and the data changing unit 55 updates the training data set 61 in accordance with the detected problem (step S107). Returning to step S102, the training control unit 57 starts the processing of the training unit 52, and the training unit 52 retrains the machine learning model on the updated training data set 61. The second steps subsequent to step S103 are the same as those in the first steps, and therefore descriptions thereof are omitted.

When it is determined in step S104 that the trained machine learning model satisfies the performance condition (Y in step S104), the training control unit 57 causes the model deployment unit 56 to start the processing, and the model deployment unit 56 deploys the trained machine learning model to the question response server 2 (step S108).

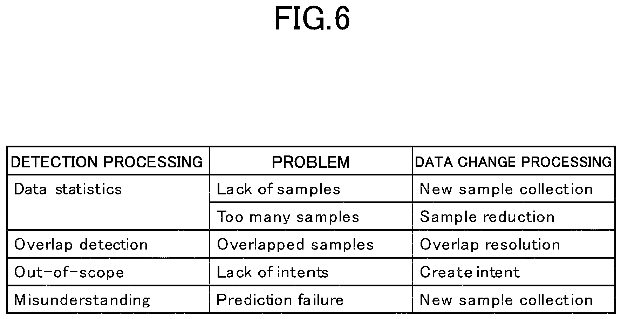

The number of detection methods for detecting problems by the problem detecting unit 54, and the number of methods for updating the data by the data changing unit 55 are plural, respectively. FIG. 6 is a diagram for explaining the processing of the problem detecting unit 54 and the data changing unit 55. The column of detection processing indicates the type of method for detecting the problem of the training data set 61 by the problem detecting unit 54, the column of problem indicates the type of problem detected, and the data change processing indicates the type of updating method of the training data set 61 to solve the detected problem. Details of the methods and the processing performed for the methods shown in FIG. 6 will be described below.

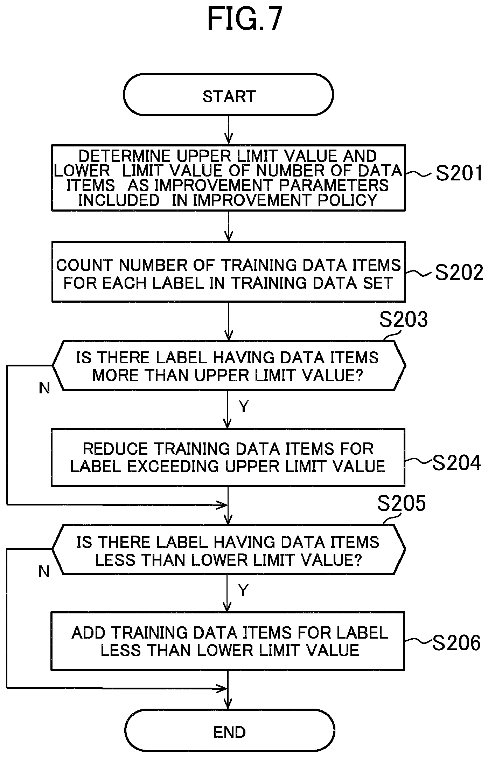

First, "Data statistics" (data analysis) will be described. FIG. 7 is a flow chart showing an example of processing related to the data analysis. The processing shown in FIG. 7 is the processing related to the data analysis extracted from processing of the steps S105, S106, and S107.

In the processing shown in FIG. 7, the training control unit 57 determines an upper limit value and a lower limit value of the number of items of data, which are improvement parameters included in the improvement policy (step S201). The upper limit value and the lower limit value of the number of data items may be determined to be different from the upper limit value and the lower limit value used previously. If the improvement parameter for another problem detection method is changed, the previous upper limit value and lower limit value may be used without being changed. The upper limit value and the lower limit value may be determined by being selected from predetermined candidate values.

The training control unit 57 calls the API of data analysis in the problem detecting unit 54 by using the upper limit value and the lower limit value as arguments, and the problem detecting unit 54 totals the number of training data items for each of the labels for the training data included in the training data set 61 (step S202).

The upper limit value and the lower limit value may not have to be parameters when the API of the data analysis is called. For example, the API of the data analysis may total the number of training data items for each label, and the training control unit 57 may determine an upper limit value and a lower limit value according to the number of training data items for each label. For example, the training control unit 57 may acquire a maximum value and a minimum value of the number of training data items for each label, and set a value smaller than the maximum value by a predetermined value as an upper limit value and a value larger than the minimum value by a predetermined value as a lower limit value.

Once the number of data items has been totaled, the training control unit 57 determines whether there is a label having the total number of data items more than the upper limit value (step S203).

If there is a label having the number of data items more than the upper limit value (Y in step S203), the training control unit 57 determines that the "Too many samples" has been detected, and calls the API of the processing of "Sample Reduction" (training data reduction) in the data changing unit 55 with the upper limit value and the number of labels exceeding the upper limit value as arguments. The data changing unit 55 then reduces the number of training data items for labels having training data items more than the upper limit value (step S204). The data changing unit 55 may calculate a sum of similarities between each of training data items including labels exceeding the upper limit value and the question data including the same label, and determine a training data item to be deleted based on the order of the data items sorted by the sum. For example, a training data item of a predetermined order may be deleted. A training data item to be deleted may be randomly determined. If there is no label having the number of data items more than the upper limit, the processing of step S204 is skipped.

If there is a label having the number of data items lower than the lower limit value (Y in step S205), the training control unit 57 determines that "Lack of samples" has been detected, and calls the API of the processing of "New sample collection"(obtaining training data) in the data changing unit 55 with the lower limit value and the label having the number of data items lower than the lower limit value as arguments. In the processing of obtaining the training data, the data changing unit 55 extracts the question data corresponding to the label from the question log 62, and adds the training data including the extracted question data and the label to the training data set 61. The question data to be added is extracted from the question log 62 based on the question data corresponding to the label in the training data set 61 and the question data stored in the question log 62. Details of such processing will be described later.

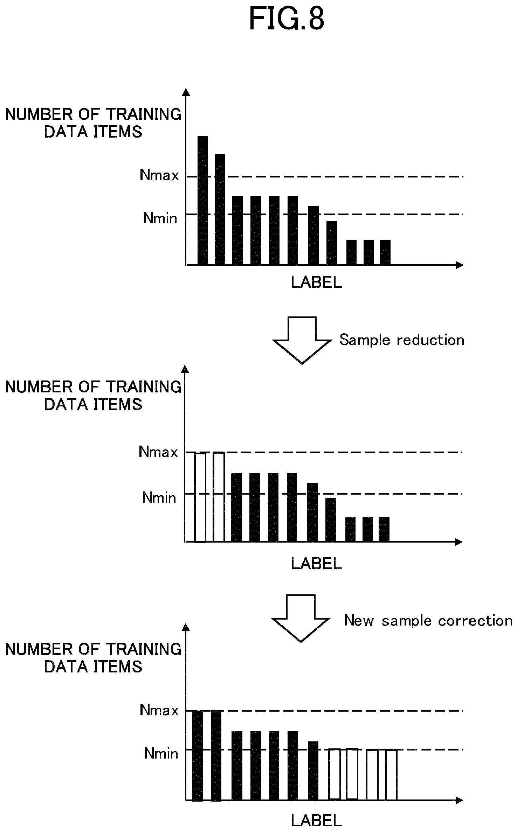

FIG. 8 is a diagram for explaining adjustment of the number of training data sets 61. FIG. 8 shows three graphs, in which a vertical axis of each graph represents the number of training data items for each of the labels. In FIG. 8, Nmax represents the upper limit value of the number of data items, and Nmin represents the lower limit value of the number of data items.

The top graph in FIG. 8 shows the number of training data items for each label obtained in the data analysis. In this example, the two labels have the number of training data items more than the upper limit value, and thus "Sample Reduction"(training data reduction) processing is performed for those two labels, thereby changing the training data set 61 so that the number of training data items is equal to or less than the upper limit value (see the two labels on the left side in the middle graph in FIG. 8). Further, in this example, the four labels have the number of training data items less than the lower limit value, and thus "New sample collection" (data addition) processing is performed for those four labels, thereby changing the training data set 61 so that the number of training data items is equal to or more than the lower limit value (see the four labels on the right side in the bottom graph in FIG. 8).

When there is a large difference in the number of training data items between the labels, the machine learning models tend to output labels having an unnecessarily large number of data items. The number of training data items is adjusted as described above, and the accuracy of the machine learning model can be thereby ensured.

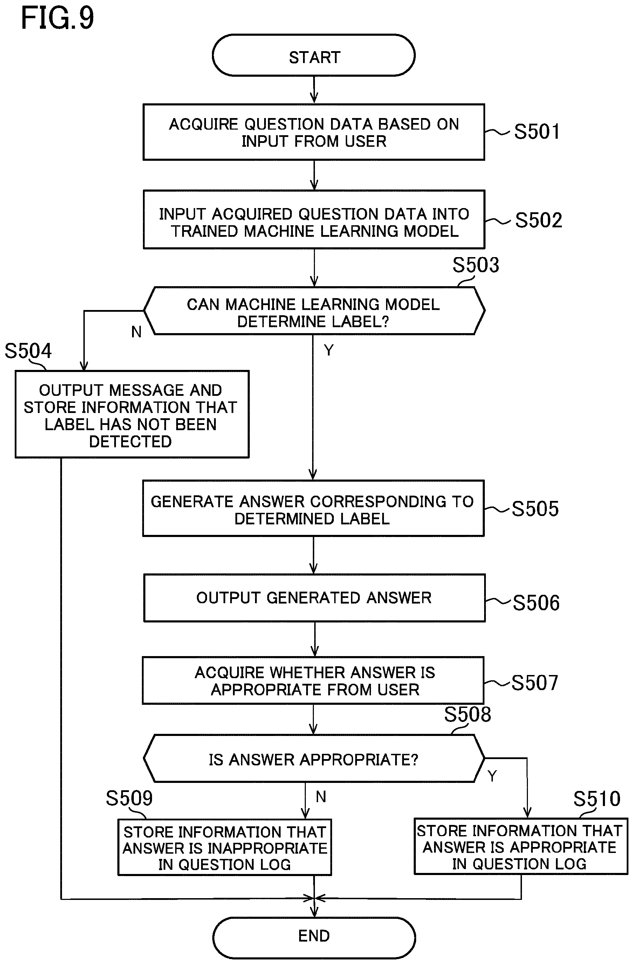

Here, the processing of the question answering unit 58 of the question response server 2 and the question log 62 after the machine learning model is deployed will be described. FIG. 9 is a flow chart showing an example of processing of the question answering unit 58. First, the natural language processing unit 71 of the question answering unit 58 acquires question data based on an input from the user (step S501). The natural language processing unit 71 may acquire the question text entered by the user as the question data, or acquire the question data by morphologically analyzing the question text.

The natural language processing unit 71 inputs the acquired question data into the trained machine learning model (step S502). If the machine learning model is unable to determine a label (N in step S503), the dialog managing unit 72 transmits a message to the user to inform that the question cannot be answered, and stores information indicating the question data in the question log 62 together with the information indicating that the corresponding label has not been detected (step S504).

If the machine learning model is able to determine a label (Y in step S503), the dialog managing unit 72 sends the determined label to the answer generating unit 73, and the answer generating unit 73 generates an answer to the determined label (step S505). The answer generating unit 73 may generate an answer by simply obtaining the text of the answer stored in association with the label, or dynamically generate an answer using the information recorded in association with the user or the organization as the target of the question.

The dialog managing unit 72 outputs the generated answer to the user terminal 3 (step S506). The user terminal 3 outputs the answer with a screen for the user to input whether the answer is appropriate for the question, and transmits the input from the user to the question response server 2. The dialog managing unit 72 acquires feedback information indicating whether the answer is appropriate from the user terminal 3 (step S507) . Upon receiving the information indicating that the answer is inappropriate (N in step S507), the dialog managing unit 72 stores the information indicating the question data, the determined label, and the information indicating that the answer is inappropriate in the question log 62 (step S509). Upon receiving the information indicating that the answer is appropriate (Y in step S507), the dialog managing unit 72 stores the information indicating the question data, the determined label, and the information indicating that the answer is appropriate in the question log 62 (step S510) .

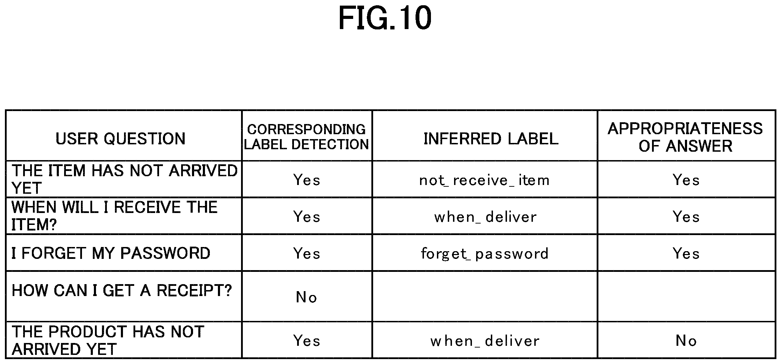

FIG. 10 is a diagram showing an example of the question log 62. The "user question" is information indicating the question data and is the text of the question entered by the user. The "corresponding label detection" is information indicating whether the machine learning model is able to determine a label, and "Yes" indicates that the label is able to be determined, and "No" indicates that the label is not able to be determined. The "inferred label" is a label determined by the machine learning model. "Appropriateness of answer" is feedback from the user indicating whether the answer is appropriate, and "Yes" indicates that the answer is appropriate and "No" indicates that the answer is inappropriate.

Such information stored in the question log 62 is used in part of the processing of the problem detecting unit 54 and the data changing unit 55 to be described below. The question log 62 is generated after the deployment of the machine learning model, although it is possible to perform the processing using the question log 62 when the machine learning model is retrained due to a change in the situation, for example.

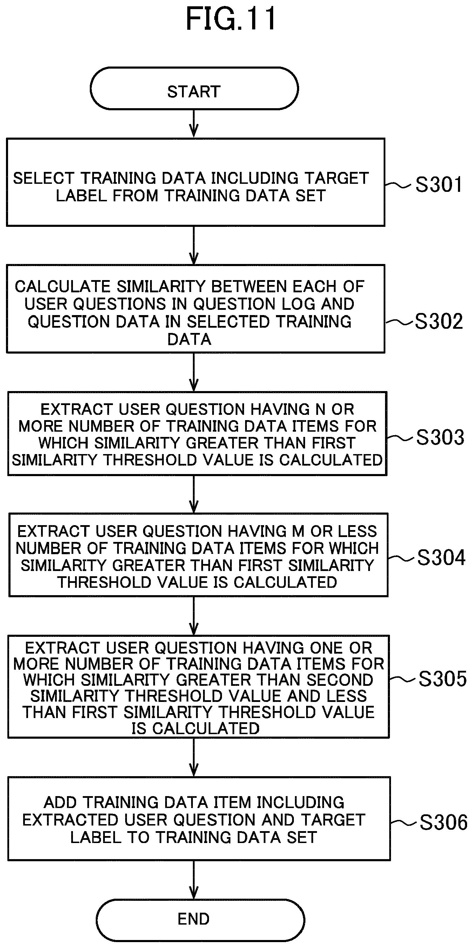

In the following, the processing of "New sample collection" (data addition) will be described in more detail. FIG. 11 is a flow chart showing an example of data addition. The processing of FIG. 11 is executed for each label that is determined to have the small number of data items in the training data set 61.

The data changing unit 55 selects a training data item including a target label from the training data set 61 (step S301). The data changing unit 55 calculates a similarity between question data included in each of the selected training data items and each of the user questions included in the question log 62 (step S302). The similarity may be calculated for all combinations of one of the selected training data items and one of the user questions.

The data changing unit 55 may generate a text vector using keywords extracted from the text of the user question by the morphological analysis or keywords included in the question data and calculate the similarity of the generated text vector, thereby calculating the similarity between the user question and the question data. Further, a machine learning model in which text is directly converted into a text vector by a so-called Deep Learning may be constructed in advance, and the data changing unit 55 may input the text of the user question and the text of the question data into such a machine learning model and calculate the similarity of the text vector output by the machine learning model.

When the similarity is calculated, the data changing unit 55 extracts a user question having the N (e.g., 3) or more number of training data items for which the similarity larger than a first similarity threshold value (e.g., 0.9) is calculated from among the plurality of user questions (step S303: first method). This is the processing of extracting a question similar to many training data items.

Next, the data changing unit 55 extracts a user question having the M (e.g., 1) or less number of training data items for which the similarity larger than the first similarity threshold value is calculated from among the plurality of user questions (step S304: second method). This is the processing of extracting a question similar to the small number of training data items.

Next, the data changing unit 55 extracts a user question having the one or more number of training data items for which the similarity greater than the second similarity threshold value (e.g., 0.6) and less than the first similarity threshold value is calculated from the plurality of user questions (step S305: third method). This is the processing of extracting a question to extend the scope of questions corresponding to the labels in the training data.

The data changing unit 55 adds, to the training data set 61, the training data including the question data based on the user question extracted by the processing in steps S303 to S305 and labels to be processed (step S306).

When the number of the user questions extracted in the step S306 is larger than the value obtained by subtracting the number of training data items in the label to be processed from the lower limit value (the number of items to be added), the data changing unit 55 may select the user question of the number to be added from the extracted user questions and add the training data items regarding the selected user question. In this processing, the data changing unit 55 may randomly select a user question, or may set a reference ratio in advance for each of the first to third methods, and the number of user questions extracted by each of the first to third methods is divided by the number of the entire extracted user questions, and the extracted user questions are reduced by using the method having the ratio thus calculated exceeds the reference ratio. In this manner, the number of user questions to be added may be selected.

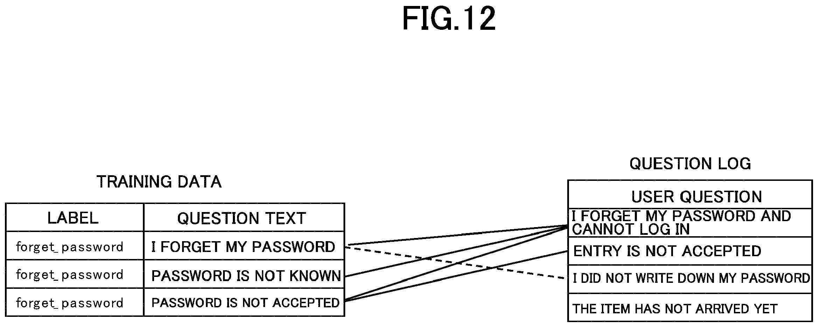

FIG. 12 is a diagram for explaining a relationship between the similarity and the extraction of user questions. In the example of FIG. 12, a solid line connecting a record of the training data and a record of the question log 62 indicates that the similarity calculated from these records is equal to or more than the first similarity threshold value, and a broken line indicates that the similarity calculated from these records is equal to or more than the second similarity threshold value and less than the first similarity threshold value. The absence of a line indicates that the similarity equal to or more than the second similarity threshold value has not been calculated.

When N is 3 and M is 1, among the four user questions included in the question log 62 shown in FIG. 12, the first user question is extracted by the first method because the similarity with three (N or more) question texts is equal to or more than the first similarity threshold value. The second user question is extracted by the second method because the similarity with one (M or less) question text is equal to or more than the first similarity threshold value. The third user question is extracted by the third method because the similarity with one question text is equal to or more than the second similarity threshold value. Not only the user questions having the similarity with many question texts of the training data but also other user questions are extracted, which prevents the loss of accuracy due to unbalanced questions corresponding to the labels.

The "New sample collection" processing may be used to maintain a test data set. For example, a label with a small number of data items in the test data included in the test data set may be specified, and the "New sample collection" processing may be performed on the specified label. In this case, the test data set may be used instead of the training data set 61 in the entire processing.

The user question may be extracted using other methods. For example, the training data set 61 may be used to train an evaluation machine learning model for calculating a score indicating whether the user question corresponds to a predetermined target label, and the data changing unit 55 may extract the user question based on whether the score that is output when the user question in the question log 62 is entered to the evaluation machine learning model exceeds a threshold value.

Further, a machine learning model that extracts a text vector when a question text is entered is constructed using so-called deep learning, and the data changing unit 55 may input a question text included in the training data set 61 and stored as the training data together with the label to be processed into the machine learning model to obtain the average of the output text vectors. Further, the data changing unit 55 may input the user question in the question log 62 to such a machine learning model, and extract the user question based on whether the similarity between the output text vector and the average exceeds the threshold value.

Next, the processing of "Overlap detection" and "Overlap resolution" to address the problem of "Overlapped samples" will be described. When the API of "Overlap detection" is called, the problem detecting unit 54 detects the training data in which different labels that are similar question data are set. More specifically, the problem detecting unit 54 executes the following two processes for each of question sentences (described as target question sentences) belonging to the label (target label) determined by the performance evaluating unit 53 as having the correct answer rate lower than the threshold value. The first process is to calculate a first indicator indicating the similarity between the target question sentence and other question sentences belonging to the target label. The second process is to calculate a second indicator indicating the similarity between the target question sentence and each of the question sentences belonging to the other labels.

When the second indicator indicates the similarity with any of the question sentences belonging to other labels and the first indicator indicates the similarity with other question sentences belonging to the target label is lower than the reference status, the data changing unit 55 where the API of "Overlap resolution" is called deletes the training data including the target question sentence from the training data set 61.

In the training data set 61 shown in FIG. 3, the fourth training data and the sixth training data have very close meanings of the questions, but are given different labels. In such a case, the machine learning model cannot be trained well, and the accuracy of the output label is reduced. In this case, the inappropriate training data item is deleted from the training data, and the accuracy of the machine learning model is thereby improved.

The processing of "Out-of-scope" and "Create intent" to address the problem of "Lack of intents" will be described. The problem detecting unit 54 in which the API of "Out-of-scope" is called determines whether the number of user questions for which the labels are not determined exceeds the threshold value in the question log 62. If the number exceeds the threshold value, the labels corresponding to the questions may be insufficient in number.

The data changing unit 55 in which the API of "Create intent" is called clusters the text of the plurality of user questions for which the labels are not determined, and, when there is a cluster to which the number of user questions exceeding a predetermined value belong, outputs the user questions belonging to such a cluster as label candidates to the administrator of the training management server 1. The administrator inputs a label to add based on the output candidates and a user question corresponding to the added label among the user questions that are output. The data changing unit 55 adds the training data including the entered user question and label.

In the question log 62 shown in FIG. 10, the machine learning model is not able to determine the corresponding label to the fourth data. If there are a lot of such cases, the "Out-of-scope" and "Create intent" processing make it easier to add training data.

The processing of "Prediction failure" to address to the problem of "Misunderstanding" will be described. The problem detecting unit 54 in which the API of "Prediction failure" is called counts the number of user questions for which the answers are considered to be inappropriate in the question log 62 and the total number of user questions for each label. The problem detecting unit 54 then determines, for each label, whether an indicator value obtained by dividing the number of user questions for which the answers are inappropriate by the total number exceeds a predetermined threshold value. If the indicator value exceeds the threshold value, it indicates that there are many determination errors for such a label.

If there is a label that exceeds the threshold value, the API of "New sample collection" is called, and the data changing unit 44 extracts the user questions from the question log 62 so that training data items of such a label is greater than the current number of training data items, and adds the training data including the user questions to the training data set 61.

In the question log 62 shown in FIG. 10, the label output from the machine learning model is not appropriate for the fifth data. If there are a lot of such cases, the training data sets 61 can be adjusted by the processing of "Prediction failure" and "New sample collection" so as to easily improve the accuracy of the machine learning model.

As described above, evaluation of the machine learning model, detection of problems in the training data set 61 according to the evaluation, and change of the training data set 61 are executed in a controlled environment, and thus the administrator can prepare the training data set 61 in order to more easily ensure the performance of the machine learning model. Further, the time required for training the machine learning model is shortened, and this serves to easily improve the response to questions using the machine learning model in accordance with changes in the environment.

While there have been described what are at present considered to be certain embodiments of the invention, it will be understood that various modifications may be made thereto, and it is intended that the appended claims cover all such modifications as fall within the true spirit and scope of the invention.

## Claims

1. An information processing system that includes a training server that trains a machine learning model on a training data set including input data and a label, which is ground truth data for the input data, and a response server that inputs input data, which is entered by a user, to the trained machine learning model and outputs response data based on a label that is output by the machine learning model, the information processing system comprising:
initial data obtaining means for obtaining the training data set;
training means for training the machine learning model on the training data set;
evaluating means for inputting test data to the machine learning model trained on the training data set and evaluating whether performance of the machine learning model satisfies a predetermined condition based on an output of the machine learning model to which the test data is entered;
deployment means for deploying the trained machine learning model into the response server when the performance of the machine learning model is evaluated to satisfy the predetermined condition;
data updating means for updating the training data set when the performance of the machine learning model is evaluated not to satisfy the predetermined condition; and
retraining means for retraining the machine learning model on the updated training data set, wherein
the information processing system repeats processing of the data updating means, the retraining means, and the evaluating means in response to the evaluation of the evaluating means.

2. The information processing system according to claim 1, further comprising detecting means for determining whether the training data set satisfies a detection condition when the performance of the machine learning model is evaluated not to satisfy the predetermined condition, wherein
the data updating means updates the training data set when the detection condition is determined to be satisfied.

3. The information processing system according to claim 2, wherein
the detecting means determines whether a number of items of input data for each label in the training data set satisfies the detection condition, and
when the detection condition is determined to be satisfied, the data updating means updates the training data set.

4. The information processing system according to claim 1, wherein
the data updating means updates the training data set based on an improvement parameter when the performance of the machine learning model is evaluated not to satisfy the predetermined condition, and
the information processing system further includes parameter updating means for updating the improvement parameter in response to an update of the training data set.

5. The information processing system according to claim 2, further comprising log means for storing input data in a log storage when the user inputs the input data, wherein
the detecting means determines whether there is a label for which a number of items of the input data is insufficient in the training data set, and
when it is determined that there is a label for which a number of items of the input data is insufficient, the data updating means extracts an input data item corresponding to the label from the input data stored in the log storage and adds training data including the extracted input data item and the label to the training data set.

6. The information processing system according to claim 5, wherein
when it is determined that there is a label for which a number of items of the input data is insufficient, the data updating means extracts an input data item corresponding to the label from the input data stored in the log storage based on the input data item corresponding to the label in the training data set and the input data stored in the log storage.

7. The information processing system according to any one of claims 1 to 4, further comprising:
log means for storing, when the user inputs input data, the input data in a log storage; and
test data adding means for extracting an input data item corresponding to one of labels from the input data stored in the log storage and adding a set of the extracted input data item and the label to the training data.

8. An information processing method comprising:
obtaining a training data set including input data and a label, which is ground truth data for the input data and used for generating response data;
training a machine learning model on the training data set;
inputting test data to the machine learning model trained on the training data set and evaluating whether performance of the machine learning model satisfies a predetermined condition based on an output of the machine learning model to which the test data is entered;
deploying the trained machine learning model, for which the performance is evaluated, into a response server when the performance of the machine learning model is evaluated to satisfy the predetermined condition, the response server inputting input data, which is entered by a user, to the trained machine learning model and outputting response data based on a label that is output by the machine learning model;
updating the training data set when the performance of the machine learning model is evaluated not to satisfy the predetermined condition; and
retraining the machine learning model on the updated training data set, wherein
the information processing method repeats, in response to the evaluation, updating the training data set, retraining the machine learning model, and evaluating the performance of the machine learning model.

9. An information processing device comprising:
initial data obtaining means for obtaining a training data set including input data and a label, which is ground truth data for the input data and used for generating response data;
training means for training a machine learning model on the training data set;
evaluating means for inputting test data to the machine learning model trained on the training data set and evaluating whether performance of the machine learning model satisfies a predetermined condition based on an output of the machine learning model to which the test data is entered;
deployment means for deploying the trained machine learning model, for which the performance is evaluated, into a response server when the performance of the machine learning model is evaluated to satisfy the predetermined condition, the response server inputting input data, which is entered by a user, to the trained machine learning model and outputting response data based on a label that is output by the machine learning model;
data updating means for updating the training data set when the performance of the machine learning model is evaluated not to satisfy the predetermined condition; and
retraining means for retraining the machine learning model on the updated training data set, wherein
the information processing device repeats processing of the data updating means, the retraining means, and the evaluating means in response to the evaluation of the evaluating means.
